# EUROPÄISCHE PATENTSCHRIFT

(11) **EP 0 680 549 B1**
(45) Veröffentlichungstag und Bekanntmachung des Hinweises auf die Patenterteilung: **10.07.1996**
(21) Anmeldenummer: 94905021.5
(22) Anmeldetag: 10.01.1994
(51) Int. Cl.: F01N 3/28, H05B 3/02

(54) **ELEKTRISCH ISOLIERENDE STÜTZSTRUKTUR MIT MÖGLICHKEIT ZUR METALLISCHEN ANBINDUNG, VERFAHREN ZUR IHRER HERSTELLUNG UND DEREN ANWENDUNG**
ELECTRICALLY INSULATING SUPPORTING STRUCTURE CAPABLE OF METALLIC BONDING, PROCESS FOR PRODUCING THE SAME AND ITS USE
STRUCTURE D'APPUI ELECTRO-ISOLANTE PERMETTANT UNE LIAISON METALLIQUE, SON PROCEDE DE FABRICATION ET SON UTILISATION

(30) Priorität: 21.01.1993 DE 4301564
(43) Veröffentlichungstag der Anmeldung: 08.11.1995
(73) Patentinhaber: Emitec Gesellschaft für Emissionstechnologie mbH, D-53797 Lohmar (DE)
(72) Erfinder: SWARS, Helmut, D-51429 Bergisch Gladbach (DE); VIERKÖTTER, Manfred, D-53819 Neu Seelscheid (DE)
(74) Vertreter: Kahlhöfer, Hermann, Dipl.-Phys.
(86) Internationale Anmeldenummer: EP9400048
(87) Internationale Veröffentlichungsnummer: WO9417292

(56) Entgegenhaltungen:
- WO-A-90/12951
- WO-A-91/14855
- WO-A-92/02714
- WO-A-93/12880
- US-A- 2 255 500

## Beschreibung

Die vorliegende Erfindung betrifft eine elektrisch isolierende, in allen Richtungen mechanisch belastbare Stützstruktur mit Möglichkeit zur metallischen Anbindung an voneinander elektrisch getrennte elektrisch leitfähige Bauteile. Bei vielen technischen Anwendungen müssen elektrisch leitfähige Bauteile elektrisch voneinander isoliert angeordnet werden. Oftmals müssen diese Bauteile dabei trotzdem mechanisch untereinander zusammengehalten werden, so daß auch eine Vielzahl von elektrisch isolierenden Stützstrukturen bekannt ist. Im allgemeinen werden zur elektrischen Isolierung Kunststoffe oder keramische Bauteile verwendet.

Probleme treten allerdings immer dann auf, wenn die elektrischen Isolierungen gleichzeitig erheblichen mechanischen Belastungen ausgesetzt sind. So sind keramische Strukturen zwar mit Druck belastbar, vertragen jedoch keine großen Zugkräfte. Außerdem ist es zur Aufnahme von Zugkräften erforderlich, keramische Strukturen an elektrisch leitfähigen Bauteilen zu befestigen, was ebenfalls problematisch ist. Zwar sind metallisierte Keramiken bekannt, die beispielsweise angelötet werden können, jedoch ist auch hier die Zugbelastung nur so groß, wie die Keramik selbst dies zuläßt.

Aus der WO 92/02714 ist ein elektrisch beheizbarer Wabenkörper mit inneren Tragstrukturen bekannt, bei dem einzelne Bauteile bzw. Teilbereiche elektrisch voneinander isoliert werden müssen, wobei gleichzeitig extreme Temperaturbelastungen und, durch thermische Dehnungen bedingt, auch extreme mechanische Belastungen auftreten.

Aufgabe der vorliegenden Erfindung ist die Schaffung einer elektrisch isolierenden Stützstruktur mit Möglichkeit zur metallischen Anbindung an voneinander elektrisch getrennte elektrisch leitfähige Bauteile, wobei diese Stützstruktur hohen mechanischen Belastungen in allen Richtungen, insbesondere auch Zugbelastungen, gewachsen sein soll. Besonders soll eine solche Stützstruktur für die Verwendung in einem elektrisch beheizbaren Wabenkörper mit seinen extremen Belastungen geeignet sein. Aufgabe ist auch die Schaffung eines geeigneten Verfahrens zur Herstellung solcher Stützstrukturen.

Zur Lösung dieser Aufgabe dient eine elektrisch isolierende, in allen Richtungen mechanisch belastbare Stützstruktur mit Möglichkeit zur metallischen Anbindung an voneinander elektrisch getrennte elektrisch leitfähige Bauteile, wobei als elektrisch isolierendes Material ein räumlich, d. h. nahezu von allen Seiten, eingepreßtes Keramikmaterial verwendet wird, wobei das Keramikmaterial zwischen einer ersten und einer zweiten metallischen Struktur angeordnet ist und die beiden Strukturen so geformt sind, daß sie von nahezu allen Seiten Druck auf das Keramikmaterial ausüben ohne sich jedoch untereinander zu berühren. Entscheidend für die vorliegende Erfindung ist dabei, daß zwei metallische Strukturen so angeordnet sind, daß sie sich zwar nicht berühren, jedoch eine zwischen ihnen liegende Keramikschicht praktisch vollständig umschließen und ein Entweichen in keiner Richtung zulassen. Dabei ist es unwesentlich, ob die Keramikschicht aus pulverförmigem Material oder einem Formteil besteht. Die Strukturen müssen so geformt sein, daß weder ein Pulver, noch Bruchstücke eines durch mechanische Belastungen bröckelnden Formteiles herausfallen können. Die hervorragenden isolierenden Eigenschaften von Keramikpulver sind beispielsweise auf dem Gebiet der Thermoelemente und Mantelmeßleiter gut bekannt. Die für solche Zwecke geeigneten keramischen und metallischen Materialien sind auch für die vorliegende Erfindung geeignet. Wichtig ist, daß die Stützstruktur eine Möglichkeit zur metallischen Anbindung an voneinander elektrisch getrennte Bauteile aufweist, wobei die erste metallische Struktur mit einem ersten Bauteil und die zweite metallische Struktur mit einem zweiten, elektrisch davon isolierten Bauteil verbindbar sein muß.

Eine einfache und besonders gut geeignete Bauform besteht darin, daß die erste metallische Struktur ein durchgehender Draht oder ein durchgehendes Band ist und die zweite metallische Struktur aus einzelnen den Draht bzw. das Band umfassenden Teilstücken besteht, wobei zwischen beiden metallischen Strukturen jeweils Keramikmaterial eingepreßt ist. Auf diese Weise kann ein Bauteil metallisch mit dem Draht oder Band verbunden werden, während ein anderes, davon elektrisch isoliertes Bauteil mit den äußeren Teilstücken verbindbar ist. Unabhängig davon, in welchen Richtungen man Kräfte auf die beiden Bauteile ausübt, wird das keramische Material zwischen den beiden metallischen Strukturen nur auf Druck belastet, da es praktisch allseitig eingeschlossen ist. Die Belastbarkeit der Stützstruktur wird daher durch die Belastbarkeit von deren metallischen Teilen und nicht durch die Belastbarkeit des keramischen Materials bestimmt.

Dabei kann das Keramikmaterial aus einzelnen Keramikperlen oder Keramikröhrchen bestehen oder aber pulverförmig sein. Es spielt auch keine Rolle, wenn zunächst kompakte Keramikperlen oder Keramikröhrchen im Laufe der Zeit unter thermischen Wechselbelastungen in Bruchstücke oder Pulver zerfallen, da die Fragmente nicht verloren gehen können.

Besonders günstig und für großflächigere Stützstrukturen geeignet ist es, wenn die erste metallische Struktur mit der zweiten metallischen Struktur formschlüssig durch eine oder mehrere Ausbauchungen mit mindestens einer Engstelle, z. B. nach Art von Druckknöpfen, verbunden ist, wobei zwischen den Strukturen Keramikmaterial, insbesondere eine dünne Metalloxidschicht vorhanden ist. Im Bereich der Ausbauchungen und der Engstelle kann die keramische Zwischenschicht nicht entweichen und wird ebenso wie bei den vorher genannten Beispielen unabhängig von den Richtungen der auf die Struktur wirkenden Kräfte immer nur auf Druck belastet.

Wie im folgenden noch näher beschrieben wird, ist es besonders vorteilhaft, die erste und die zweite metallische Struktur zunächst formschlüssig miteinander zu verbinden und erst danach zwischen ihnen eine Isolierschicht auszubilden. Dies kann durch Oxidation oder chemische Behandlung der Oberfläche oder einer besonderen Beschichtung einer der Oberflächen zwischen den beiden Strukturen erreicht werden.

Die Aufgabe wird auch gelöst durch ein Verfahren zur Herstellung einer solchen Stützstruktur, wobei ein Keramikmaterial, vorzugsweise in Pulverform, zwischen einer ersten und einer zweiten Metallstruktur nahezu allseitig eingepreßt wird, wobei die erste und die zweite Metallstruktur so geformt werden, daß beide zumindest in Teilbereichen zugänglich für die metallische Anbindung an weitere Strukturen sind. Hierbei ist wieder wesentlich, daß sowohl die erste wie auch die zweite Metallstruktur für eine metallische Anbindung an weitere Strukturen zugänglich sind, sie sich jedoch trotzdem nicht berühren und zwischen sich ein Keramikmaterial einpressen, welches unabhängig von der Richtung an den Metallstrukturen auftretender Kräfte immer unter Druck belastet wird.

Auf einfache Weise läßt sich dies verwirklichen, indem eine erste Metallstruktur von einer Keramikschicht und einer Metallhülle umgeben wird, wobei die umgebende Metallhülle in mehrere einzelne Abschnitte unterteilt wird. Wichtig ist dabei, daß die Enden der einzelnen Abschnitte der äußeren Metallstruktur nicht einfach offen sind, sondern so nach innen geformt sind, daß sie das dazwischenliegende Keramikmaterial praktisch allseitig einpressen. Aus einem herkömmlichen Mantelleiter kann man beispielsweise durch Verengung einzelner Abschnitte und anschließendes Entfernen (beispielweise mechanisch durch Ätzen oder durch Schmelzen) der verengten Bereiche des Mantels eine erfindungsgemäße Stützstruktur herstellen.

Insbesondere für großflächige Stützstrukturen ist es günstig, eine erste und eine zweite Metallstruktur, von denen mindestens eine eine chemisch zu einer elektrischen Isolierschicht umwandelbare Oberfläche oder Oberflächenbeschichtung hat, durch gemeinsame Verformung dreidimensional formschlüssig miteinander zu verbinden, wobei die umwandelbare Oberfläche zwischen den Metallstrukturen liegt und wobei anschließend die umwandelbare Oberfläche oder Oberflächenschicht in eine elektrisch isolierende Keramikschicht umgewandelt wird, insbesondere durch Oxidation, wodurch eine nahezu allseitig eingepreßte Isolierschicht zwischen den dreidimensionalen Formschlußverbindungen entsteht. Dreidimensional formschlüssige Verbindungen können zum Beispiel die von Druckknöpfen her bekannte Form haben oder durch Faltung in verschiedenen Richtungen hergestellt werden.

Besonders günstig ist es, wenn hierzu 2 Stahlbleche als erste und zweite Metallstruktur aufeinandergelegt werden, wobei mindestens eines der Bleche eine chemische in eine Isolierschicht umwandelbare Innenoberfläche besitzt, insbesondere eine aluminium-haltige Schicht, wobei die beiden Bleche zunächst in einer ersten Richtung gemeinsam gewellt werden, anschließend in einer zweiten, zur ersten etwa senkrechten Richtung unter starker Verformung der ersten Wellung nochmals gewellt werden, wodurch dreidimensionale Formschlußverbindungen zwischen den Blechen entstehen und schließlich die umwandelbare Innenoberfläche durch eine chemische Behandlung und/oder eine Wärmebehandlung in eine keramische Isolierschicht umgewandelt wird.

Die Wellung von Blechen kann durch miteinander kämmende Zahnräder erreicht werden, wobei das nacheinander erfolgende Wellen in zwei etwa senkrecht zueinanderstehenden Richtungen zu ganz besonderen Faltungsformen führt, die bei zwei aufeinanderliegenden Blechen zu sehr stabilen dreidimensionalen Formschlußverbindungen führen. Eine Aluminiumschicht auf der Innenseite eines der Bleche wird bei den beiden Wellvorgängen problemlos mit verformt und liegt auch danach noch überall zwischen den beiden Blechen. Wird diese Schicht anschließend oxidiert, was beispielsweise durch eine Wärmebehandlung unter Sauerstoff erfolgen kann, so ergibt sich eine gleichmäßige überall eingepreßte Isolierschicht zwischen den beiden Blechen. Falls es sich um eine sehr großflächige Struktur handelt, können auch später aktivierbare, sauerstoffhaltige chemische Substanzen als Beschichtung zwischen den Blechen vorgesehen werden, um den für die Oxidierung notwendigen Sauerstoff bereitzustellen.

Besonderes Anwendungsgebiet der Erfindung ist die Stabilisierung eines elektrisch beheizbaren katalytischen Konverters, wie er beispielsweise in der WO 92/02714 beschrieben ist. Auf diese Schrift wird zur Vermeidung von Wiederholungen hier vollinhaltlich Bezug genommen. Bei thermischen Wechselbelastungen und beim Einbau in Kraftfahrzeugen treten zwischen den einzelnen Teilen eines solchen elektrisch beheizbaren katalytischen Konverters erhebliche mechanische Belastungen und auch Schwingungen auf. Eine Isolierung durch Luftspalte oder durch keramische Beschichtungen ist daher nicht für alle Einsatzgebiete ausreichend. Vielmehr ist es wichtig, die einzelnen Bauteile gegenseitig mechanisch zu fixieren, so daß sie sich einander weder annähern können (was einen Kurzschluß verursachen würde) noch sich voneinander entfernen können (was zu Schwingungen oder Strukturbrüchen führen würde). Für diesen Zweck ist die erfindungsgemäße Stützstruktur besonders geeignet, indem die erste metallische Struktur an ersten Bauteilen und die zweite metallische Struktur an zweiten elektrisch davon getrennten Bauteilen metallisch befestigt werden kann. Hierbei können sowohl flächige Stützstrukturen oder einzelne oder mehrere linienförmige Stützstrukturen Anwendung finden.

Wie anhand der Zeichnung noch näher erläutert wird, sind elektrisch beheizbare katalytische Konverter oft als elektrisch leitfähige Wabenkörper ausgebildet und in verschiedene Teilbereiche unterteilt. Die erfindungsgemäße Stützstruktur kann nun gleichzeitig zur elektrischen Unterteilung und gegenseitigen Fixierung der verschiedenen Teilbereiche verwendet werden, indem diese im Inneren des Wabenkörpers angeordnet wird, wobei die erste Metallstruktur der Stützstruktur mit einem der Teilbereiche und die zweite Metallstruktur mit einem anderen der Teilbereiche metallisch fest verbunden wird. Dies kann besonders vorteilhaft durch Hartlöten geschehen, da solche Wabenkörper oft ohnehin gelötet werden müssen. Allerdings ist für die Verbindungstechnik auch Schweißen oder Sintern möglich. Eine andere Möglichkeit der Verwendung einer erfindungsgemäßen Stützstruktur bei solchen Wabenkörpern besteht darin, diese an den Stirnseiten des katalytischen Konverters anzuordnen und verschiedene Teilbereiche gegeneinander abzustützen, indem die erste Metallstruktur der Stützstruktur mit einem der Teilbereiche und die zweite Metallstruktur mit einem anderen Teilbereich metallisch fest verbunden ist. In diesem Falle verbindet die Stützstruktur wie ein Bügel oder wie eine Klammer verschiedene Teilbereiche mechanisch, nicht jedoch elektrisch.

Ausführungsbeispiele der Erfindung sind in der Zeichnung dargestellt und zwar zeigen
- Fig. 1: schematisch im Längsschnitt Möglichkeiten zur Ausgestaltung von Stützstrukturen mit durchgehender innerer metallischer Struktur,
- Fig. 2: schematisch einen Schnitt durch eine dreidimensionale Formschlußverbindung zwischen zwei Blechen,
- Fig. 3: schematisch einen Ouerschnitt durch eine Stützstruktur mit bandförmiger innerer metallischer Struktur,
- Fig. 4: einen Teilausschnitt eines Querschnitts durch einen elektrisch beheizbaren katalytischen Konverter mit verschiedenen Beispielen für die Verwendung erfindungsgemäßer Stützstrukturen in seinem Inneren und
- Fig. 5: eine stirnseitige Ansicht eines elektrisch beheizbaren katalytischen Konverters mit einer stirnseitig eingebauten erfindungsgemäßen Stützstruktur.

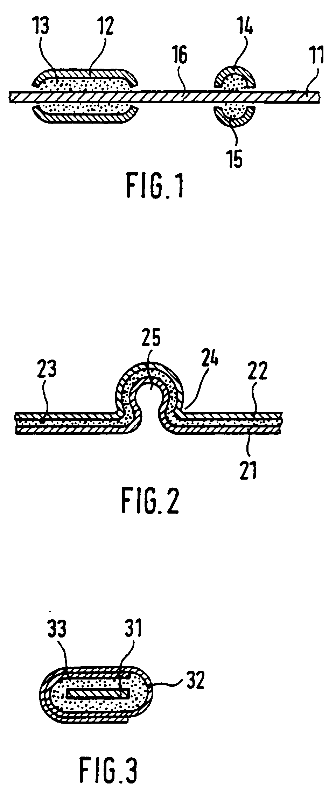

Fig. 1 zeigt schematisch im Längsschnitt eine drahtförmige erste Metallstruktur 11, die in Teilbereichen 16 von außen frei zugänglich ist. Eine zweite metallische Struktur 12 umfaßt in anderen Teilbereichen die erste metallische Struktur 11, wobei zwischen beiden Strukturen 11, 12 Keramikmaterial 13 eingepreßt ist, im vorliegenden Beispiel ein pulverförmiges Material, beispielsweise Aluminium- und/oder Magnesiumoxid. Die zweite metallische Struktur 12 hat die Form von kurzen Röhrchen, die mit Abständen auf die erste metallische Struktur 11 aufgefädelt sind. Statt Röhrchen können für die zweite metallische Struktur auch perlenähnliche Formen 14 mit eingeschlossenen Keramikperlen 15 dienen. Auch diese sind unter Belassung von zugänglichen Teilbereichen 16 auf die erste metallische Struktur 11 aufgefädelt. Die verbleibenden Schlitze zwischen den Strukturen 11 und 12 bzw. 14 genügen zwar zur elektrischen Isolierung gegen nicht zu hohe Spannungen, erlauben es dem keramischen Isoliermaterial aber nicht, zu entweichen. Dieses ist durch die fast geschlossene Form der äußeren Strukturen 12 bzw. 14 praktisch allseitig eingeschlossen und zusammengepreßt. Sowohl die innere metallische Struktur 11 wie auch die äußere metallische Struktur 12 bzw. 14 können metallisch mit anderen Bauteilen verbunden werden, die elektrisch getrennt sein sollen. Insbesondere besteht die Möglichkeit, Lötverbindungen herzustellen, da die Stützstruktur temperaturunempfindlich ist und selbst Hochtemperatur-Lötprozesse unbeschadet überstehen kann.

Ein anderes Ausführungsbeispiel der Erfindung ist in Fig. 2 schematisch im Schnitt dargestellt. Eine erste metallische Struktur 21 und eine zweite metallische Struktur 22 mit einer dazwischenliegenden Isolierschicht 23 sind so verformt, daß sich eine Ausbauchung 25 ergibt, die mindestens eine Engstelle 24 aufweist. Unter Engstelle ist dabei eine Form zu verstehen, die beispielsweise nach Art eines Druckknopfes verhindert, daß die beiden metallischen Strukturen auseinandergezogen werden können. Viele Arten von solchen formschlüssigen Ausbauchungen sind möglich, wobei entweder, wie bei Druckknöpfen, eine einzige Ausbauchung schon eine dreidimensionale Formschlußverbindung bildet oder indem mehrere in unterschiedlichen Ebenen verlaufende rillenartige Ausformungen insgesamt eine dreidimensionale Formschlußverbindung bilden. Besonders günstig lassen sich dreidimensionale formschlüssige Verbindungen durch gemeinsames Wellen von zwei aufeinanderliegenden Blechen in zwei etwa senkrecht zueinanderliegenden Richtungen erreichen. Die entstehenden, in Wellenlinien verlaufenden Ausbauchungen bilden eine großflächige dreidimensionale Formschlußverbindung. Wegen der üblicherweise hohen Verformungen bei der Herstellung formschlüssiger Ausbauchungen kann es sein, daß eine schon vorher eingebrachte Isolierschicht 23 an einzelnen Stellen weggedrückt würde, so daß eine elektrisch leitende Verbindung zwischen den beiden metallischen Strukturen 21, 22 entstehen würde. Vorteilhaft ist es daher, die Isolierschicht 23 erst nach Fertigstellung der dreidimensionalen Formschlußverbindungen zu erzeugen. Dies kann beispielsweise durch Oxidation der Innenoberflächen der Bleche 21, 22 geschehen, wobei diese Bleche vorab ganz gezielt mit einer Beschichtung, beispielsweise aus Aluminium und/oder Magnesium, versehen werden können, um bestimmte keramische Oxidschichten zu erzeugen. Bei großflächigen Strukturen kann auch ein sauerstoffhaltiges Material zusätzlich als Beschichtung eingefügt werden, um den Oxidationsvorgang später durch Erhitzen zu beschleunigen. Auch die in Fig. 2 dargestellte Stützstruktur läßt sich beidseitig metallisch an andere Bauteile anbinden, beispielsweise durch Verlöten.

Fig. 3 zeigt einen Ouerschnitt durch ein anderes Ausführungsbeispiel für eine Stützstruktur mit einer bandförmigen ersten Struktur 31, einer keramischen Isolierschicht 33 und einer zweiten äußeren Metallstruktur 32, welche aus einem Blech gewickelt ist. Je nach Stabilitätsanforderungen können dabei die überlappenden Bereiche der äußeren Struktur 32 miteinander verlötet sein. Auch bei dem in Fig. 3 dargestellten Beispiel umfaßt die zweite metallische Struktur 32 die erste bandförmige metallische Struktur 31 nur in Teilstücken, so daß dazwischen zugängliche Bereiche der ersten metallischen Struktur 31 zur metallischen Anbindung an andere Bauteile vorhanden sind.

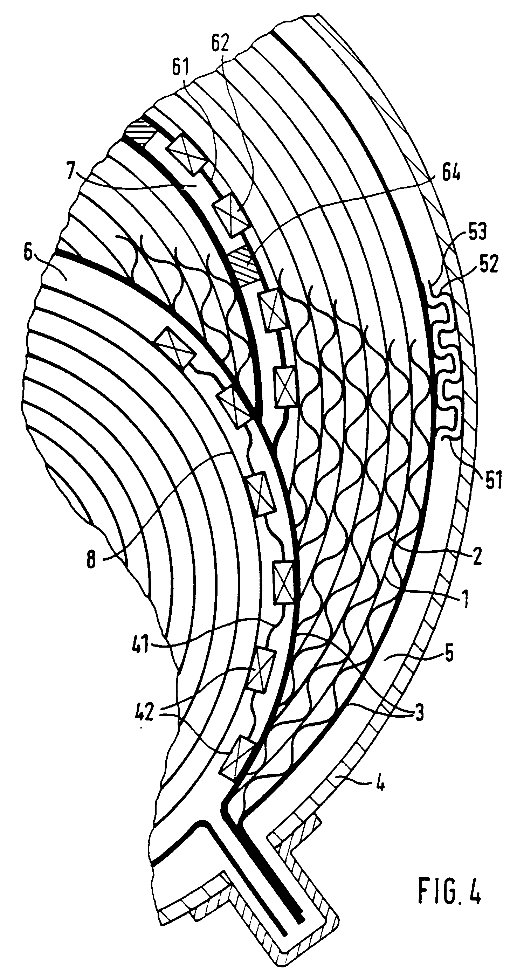

Eine bevorzugte Anwendung der erfindungsgemäßen Stützstrukturen kann gemäß einem weiteren Gedanken der vorliegenden Erfindung bei elektrisch beheizbaren metallischen Wabenkörpern, insbesondere für elektrisch beheizbare katalytische Konverter. stattfinden. In Fig. 4 ist ein Ausschnitt aus einem schematischen Querschnitt durch einen solchen Wabenkörper gezeigt mit unterschiedlichen Beispielen für Möglichkeiten zur Anbringung erfindungsgemäßer Stützstrukturen. Bezüglich des Aufbaus elektrisch beheizbarer Wabenkörper wird vollinhaltlich auf die WO 92/02714 Bezug genommen, in der der Aufbau solcher Wabenkörper ausführlich beschrieben ist. Das hier beschriebene Prinzip der Anbringung von Stützstrukturen ist jedoch analog auch bei anders geformten und unterteilten Wabenkörpern und bei anderen filigranen Strukturen, welche elektrisch voneinander isoliert, aber mechanisch verbunden werden sollen, möglich. Bei dem in Fig. 4 dargestellten Beispiel sind elektrisch leitfähige Strukturen aus glatten 1 und gewellten 2 Blechen, die von Tragstrukturen 3 gehalten werden, in einem Mantelrohr 4 untergebracht. Dabei besteht ein Isolierspalt 5 zwischen den Tragstrukturen 3 und dem Mantel 4. Ein weiterer Isolierspalt 6 befindet sich zwischen der Tragstruktur 3 und einer angrenzenden Blechlage 8. Ein weiterer Isolierspalt 7 ist an anderer Stelle zwischen Tragstrukturen 3 und Blechlagen vorhanden. Beim schnellen, notwendigerweise nicht ganz gleichmäßigen Aufheizen eines solchen Wabenkörpers treten unterschiedlich thermische Dehnungen der einzelnen Teilbereiche auf. Auch die beim Betrieb eines solchen Wabenkörpers in einem Kraftfahrzeug auftretenden Beschleunigungen üben erhebliche Kräfte auf die Struktur des Wabenkörpers aus. Für eine lange Lebensdauer ist es daher vorteilhaft, die Spalte 5, 6, 7 mechanisch durch Stützstrukturen zu stabilisieren, wobei diese Stützstrukturen Belastungen in allen Dimensionen und Richtungen aufnehmen müssen. Gleichzeitig muß eine dauerhafte elektrische Isolierung sichergestellt sein. Verschiedene Lösungen dieses Problems sind beispielhaft in Fig. 4 dargestellt. Da solche Wabenkörper im allgemeinen einem Löt- oder Sinterprozess unterworfen werden, ist es besonders günstig, wenn die Anbindung der Stützstrukturen an die benachbarten Bauteile gleichzeitig bei diesem Prozess erfolgen kann. Dies ist für die gezeigten Beispiele der Fall.

So wird der Spalt 5 durch eine Stützstruktur entsprechend Fig. 2 stabilisiert, wobei eine erste metallische Struktur 51 formschlüssig mit einer zweiten metallischen Struktur 52 durch Ausbauchungen verbunden ist und dazwischen eine Isolierschicht 53 aus keramischem Material dreidimensional verpreßt ist. Die erste metallische Struktur 51 ist fügetechnisch, z. B. durch Löten, mit der Tragstruktur 3 verbunden, während die zweite metallische Struktur 52 fügetechnisch mit dem Mantel 4 metallisch verbunden ist. Eine solche Stützstruktur kann aus einzelnen Streifen oder einer großflächigen Struktur bestehen.

Eine andere Möglichkeit zur Stabilisierung ist anhand des Spaltes 6 veranschaulicht. In diesem Spalt ist eine Stützstruktur entsprechend Fig. 1 angeordnet, wobei die erste drahtförmige metallische Struktur 41 in Wellenform gebogen ist und jeweils in den Bereichen der Wellentäler und Wellenberge zweite metallische Strukturen 42 in Form von Röhrchen oder Perlen trägt. Die zweiten metallischen Strukturen 42 berühren abwechselnd die Tragstruktur 3 und eine angrenzende Blechlage 8. Durch die (nicht dargestellte) keramische Isolierung zwischen der ersten metallischen Struktur 41 und der zweiten metallischen Struktur 42 bleibt die elektrische Isolierfunktion des Spaltes 6 erhalten, jedoch erfolgt eine haltbare, geringfügig elastische mechanische Abstützung. Die erste metallische Struktur 41 kann auch bandförmig entsprechend dem Ausführungsbeispiel in Fig. 3 sein.

Eine weitere Ausführungsform einer Stützstruktur und ihre Anbindung an benachbarte Bauteile ist anhand des Spaltes 7 dargestellt. Hier ist eine erste draht- oder bandförmige Metallstruktur 61 zunächst mit der Tragstruktur 3 des Wabenkörpers an mehreren Stellen verbunden. Hierzu werden Zwischenstücke 64 eingesetzt oder die Struktur 61 direkt mit der Tragstruktur 3 verbunden. Als Verbindungstechnik kommt hier insbesondere Schweißen in Betracht, da die Verbindung der Struktur 61 mit der Tragstruktur 3 schon vor dem Zusammensetzen des Wabenkörpers erfolgen kann. Die Struktur 61 trägt in Abständen Teilstücke einer zweiten metallischen Struktur 62, welche durch eine (nicht dargestellte) Isolierschicht von der Struktur 61 wie beschrieben elektrisch isoliert ist. Die Teilstücke der zweiten metallischen Struktur 62 berühren eine angrenzende Blechlage und können mit dieser fügetechnisch verbunden werden, insbesondere bei einem Löt- oder Sinterprozeß. Vorteil dieser Anordnung ist es, daß die Tragstruktur 3 des Wabenkörpers zusammen mit der Stützstruktur 61, 62, 64 vor dem eigentlichen Zusammenbau des Wabenkörpers vorgefertigt werden kann, so daß der Zusammenbau vereinfacht wird. Die Anbindung an die Bleche 1, 2 kann dann gleichzeitig mit einem ohnehin notwendigen späteren Lötprozeß erfolgen.

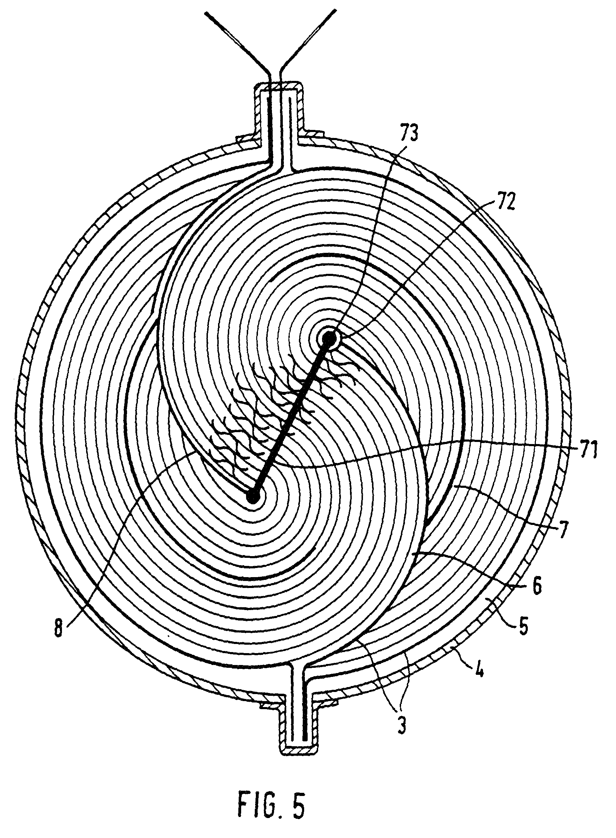

Statt der in Fig. 4 dargestellten Anbringung von Stützstrukturen im Inneren eines elektrisch beheizbaren Wabenkörpers kann dieser, wie in Fig. 5 schematisch gezeigt, auch durch äußeres, stirnseitiges Anbringen von erfindungsgemäßen Stützstrukturen stabilisiert werden. Prinzipielle Möglichkeiten einer solchen Stabilisierung sind schon in der WO 92/02714 beschrieben. Für solche stirnseitigen Abstützungen sind die erfindungsgemäßen Strukturen besonders geeignet da sie sich metallisch gut anbinden lassen. Insbesondere das in Fig. 1 gezeigte Ausführungsbeispiel eignet sich auch zur Einbindung stirnseitiger Stützen in einen elektrisch beheizbaren Wabenkörper. Hierzu wird die erste metallische Struktur 71 als Stütze zwischen den gewünschten Teilen des Wabenkörpers eingesetzt und mit diesen über eine Isolierschicht 73 und eine zweite metallische Struktur 72 verbunden. Die Zahl der gegenseitig abzustützenden Punkte und der Verlauf ihrer Verbindungsstützen kann frei entsprechend den mechanischen Bedürfnissen gewählt werden, da an jedem beliebigen Punkt des Wabenkörpers die erfindungsgemäßen Stützstrukturen metallisch befestigt werden können, ohne elektrische Kurzschlüsse zu verursachen.

Die vorliegende Erfindung eignet sich für die mechanische Abstützung elektrisch voneinander isolierter metallischer Bauteile und ist besonders für die Stabilisierung von elektrisch beheizbaren Wabenkörpern aus elektrisch leitfähigem Material geeignet. Die erfindungsgemäße Stützstruktur kann durch Hartlöten, Sintern und/oder Schweißen mit benachbarten Bauteilen verbunden werden.

## Patentansprüche

1. Elektrisch isolierende, in allen Richtungen mechanisch belastbare Stützstruktur mit Möglichkeit zur metallischen Anbindung an voneinander elektrisch getrennte elektrisch leitfähige Bauteile, dadurch gekennzeichnet, daß als elektrisch isolierendes Material ein räumlich, d. h. nahezu von allen Seiten, eingepreßtes Keramikmaterial (13; 15; 23; 33; 53; 73) verwendet wird, wobei das Keramikmaterial (13; 15; 23; 33; 53; 73) zwischen einer ersten (11; 21; 31; 41; 51; 61; 71) und einer zweiten (12; 14; 22; 32; 42; 52; 62; 72) metallischen Struktur angeordnet ist und die beiden Strukturen so geformt sind, daß sie von nahezu allen Seiten Druck auf das Keramikmaterial (13; 15; 23; 33; 53; 73) ausüben, ohne sich jedoch untereinander zu berühren.

2. Stützstruktur nach Anspruch 1, dadurch gekennzeichnet, daß die erste metallische Struktur ein durchgehender Draht (11; 41; 61; 71) oder ein durchgehendes Band (31) ist und die zweite metallische Struktur aus einzelnen den Draht ( 11; 41; 61; 71) bzw. das Band ( 31) umfassenden Teilstücken (12; 14; 42; 62) besteht, wobei zwischen beiden metallischen Strukturen jeweils Keramikmaterial (13; 15; 73) eingepreßt ist.

3. Stützstruktur nach Anspruch 2, dadurch gekennzeichnet, daß das Keramikmaterial aus einzelnen Keramikperlen (15) oder Keramikröhrchen (13; 73) besteht, welche die erste metallische Struktur (11; 71) umgeben und von der zweiten metallischen Struktur (12; 14; 72) eingefaßt sind.

4. Stützstruktur nach Anspruch 1, dadurch gekennzeichnet, daß die erste metallische Struktur (21; 51) mit der zweiten metallischen Struktur (22; 52) formschlüssig durch eine oder mehrere Ausbauchungen mit mindestens einer Engstelle (24), z. B. nach Art von Druckknöpfen, verbunden ist, wobei zwischen den Strukturen Keramikmaterial (23; 53), insbesondere eine dünne Metalloxidschicht, vorhanden ist.

5. Stützstruktur nach einem der vorhergehenden Ansprüche, dadurch gekennzeichnet, daß das Keramikmaterial (23; 53) durch Oxidation oder chemische Behandlung der Oberfläche oder einer Oberflächenbeschichtung mindestens einer der beiden Strukturen (21, 22; 51, 52) hergestellt ist, vorzugsweise nachdem die Stützstruktur (21, 22; 51, 52)ihre gewünschte Form erhalten hat.

6. Verfahren zur Herstellung einer Stützstruktur nach Anspruch 1, dadurch gekennzeichnet, daß ein Keramikmaterial (13; 15; 33; 53; 73), vorzugsweise in Pulverform, zwischen einer ersten (11; 21; 31; 41; 51; 61; 71) und einer zweiten Metallstruktur (12; 14; 32; 42; 52; 62; 72) nahezu allseitig eingepreßt wird, wobei die erste und die zweite Metallstruktur so geformt werden, daß beide zumindest in Teilbereichen zugänglich für die metallische Anbindung an weitere Strukturen (3; 4) sind.

7. Verfahren nach Anspruch 6, dadurch gekennzeichnet, daß die erste Metallstruktur (11; 41; 61) einteilig ist und die zweite Metallstruktur (12; 14; 42; 62) durch Unterteilen einer die erste Metallstruktur (11; 41; 61) umgebenden Metallhülle in mehrere einzelne Abschnitte (42; 62) hergestellt wird.

8. Verfahren zur Herstellung einer Stützstruktur nach Anspruch 5, dadurch gekennzeichnet, daß eine erste (21; 51) und eine zweite (22; 52) Metallstruktur, von denen mindestens eine eine chemisch zu einer elektrischen Isolierschicht umwandelbare Oberfläche oder Oberflächenbeschichtung hat, durch gemeinsame Verformung dreidimensional formschlüssig (24) miteinander verbunden werden, wobei die umwandelbare Oberfläche zwischen den Metallstrukturen (21, 22; 51; 52) liegt, und daß anschließend die umwandelbare Oberfläche oder Oberflächenschicht in eine elektrisch isolierende Keramikschicht (23; 53) umgewandelt wird, insbesondere durch Oxidation, wodurch eine nahezu allseitig eingepreßte Isolierschicht (23; 53) zwischen den dreidimensionalen Formschlußverbindungen (24) entsteht.

9. Verfahren nach Anspruch 8, dadurch gekennzeichnet, daß zwei Stahlbleche (21; 22) als erste und zweite Metallstruktur aufeinandergelegt werden, wobei mindestens eines der Bleche eine chemisch in eine Isolierschicht umwandelbare Innenoberfläche besitzt, insbesondere eine Aluminium-haltige Beschichtung, daß die beiden Stahlbleche zunächst in einer ersten Richtung gemeinsam gewellt werden, daß die gewellten Bleche anschließend in einer zweiten, zur ersten etwa senkrechten Richtung unter starker Verformung der ersten Wellung nochmals gewellt werden, wodurch regelmäßige dreidimensionale Formschlußverbindungen zwischen den Blechen entstehen, und daß schließlich die umwandelbare Innenoberfläche durch eine chemische Behandlung und/oder eine Wärmebehandlung in eine keramische Isolierschicht umgewandelt wird.

10. Verwendung einer Stützstruktur nach einem der Ansprüche 1 bis 5 zur Stabilisierung eines elektrisch beheizbaren katalytischen Konverters (1, 2, 3, 4, 5, 6, 7, 8), wobei die Stützstruktur (41, 42; 51, 52; 61, 62; 71, 72) im Inneren oder an den Stirnseiten des katalytischen Konverters (1, 2, 3, 4, 5, 6, 7, 8) angeordnet ist, und zwar derart, daß die erste (41; 51; 61; 71) und zweite (42; 52; 62; 72) metallische Struktur an ersten bzw. zweiten elektrisch voneinander getrennten Bauteilen (3, 4, 8) befestigt sind und diese gegeneinander fixieren.

11. Verwendung einer Stützstruktur gemäß Anspruch 10, dadurch gekennzeichnet, daß der elektrisch beheizbare katalytische Konverter (1, 2, 3, 4, 5, 6, 7, 8) ein elektrisch leitfähiger Wabenkörper (1, 2) mit einer elektrischen Unterteilung (5, 6, 7) in verschiedene Teilbereiche ist, wobei die Stützstruktur (41, 42; 61, 62) zur elektrischen Unterteilung, aber gleichzeitig zur gegenseitigen Fixierung der verschiedenen Teibereiche zwischen diesen im Inneren des Wabenkörpers (1, 2) angeordnet ist, wobei die erste Metallstruktur (41; 61) der Stützstruktur mit einem der Teilbereiche und die zweite Metallstruktur (42; 62) mit einem anderen der Teilbereiche metallisch fest verbunden sind, insbesondere durch Hartlöten und/oder Schweißen und/oder Ansintern.

12. Verwendung einer Stützstruktur nach Anspruch 10, dadurch gekennzeichnet, daß der elektrisch beheizbare katalytische Konverter (1, 2, 3, 4, 5, 6, 7, 8) ein elektrisch leitfähiger Wabenkörper (1, 2) mit einer elektrischen Unterteilung (5, 6, 7) in verschiedene Teilbereiche ist, wobei die Stützstruktur (71, 72) an den Stirnseiten des katalytischen Konverters (1, 2, 3, 4, 5, 6, 7, 8) angeordnet ist und verschiedene Teilbereiche gegeneinander abstützt, indem die erste Metallstruktur (71) der Stützstruktur mit einem der Teilbereiche (8) und die zweite Metallstruktur (72) mit einem anderen Teilbereich (3) metallisch fest verbunden ist, insbesondere durch Hartlöten und/oder Schweißen und/oder Ansintern.

## Claims

1. An electrically insulating support structure which can be mechanically loaded in all directions, with the capability of metallic bonding to electrically conductive components which are electrically separated from each other, characterised in that the electrically insulating material used is a ceramic material (13; 15; 23; 33; 53; 73) which is pressed in spatially, that is to say virtually from all sides, wherein the ceramic material (13; 15; 23; 33; 53; 73) is arranged between a first (11; 21; 31; 41; 51; 61; 71) and a second (12; 14; 22; 32; 42; 52; 62; 72) metallic structure and the two structures are so shaped that they apply pressure from virtually all sides to the ceramic material (13; 15; 23; 33; 53; 73) without however touching each other.

2. A support structure according to claim 1 characterised in that the first metallic structure is a continuous wire (11; 41; 61; 71) or a continuous strip (31) and the second metallic structure comprises individual portions (12; 14; 42; 62) which surround the wire (11; 41; 61; 71) or the strip (31), ceramic material (13; 15; 73) being respectively pressed in between both metallic structures.

3. A support structure according to claim 2 characterised in that the ceramic material comprises individual ceramic beads (15) or small ceramic tubes (13; 73) which surround the first metallic structure (11; 71) and which are enclosed by the second metallic structure (12; 14; 72).

4. A support structure according to claim 1 characterised in that the first metallic structure (21; 51) is positively lockingly connected to the second metallic structure (22; 52) by one or more outward bulge portions with at least one constriction (24), for example in the manner of press studs, wherein ceramic material (23; 53), in particular a thin metal oxide layer, is present between the structures.

5. A support structure according to one of the preceding claims characterised in that the ceramic material is produced by oxidation or chemical treatment of the surface or a surface coating of at least one of the two structures (21, 22; 51, 52), preferably after the support structure (21, 22; 51, 52) has acquired its desired shape.

6. A process for producing a support structure according to claim 1 characterised in that a ceramic material (13; 15; 33; 53; 73), preferably in powder form, is pressed in virtually on all sides between a first (11; 21; 31; 41; 51; 61; 71) and a second metal structure (12; 14; 32; 42; 52; 62; 72), wherein the first and the second metal structures are so shaped that both are accessible at least in partial regions thereof for metallic bonding to further structures (3; 4).

7. A process according to claim 6 characterised in that the first metal structure (11; 41; 61) is in one piece and the second metal structure (12; 14; 42; 62) is produced by subdivision of a metal sheath surrounding the first metal structure (11; 41; 61) into a plurality of individual portions (42; 62).

8. A process for producing a support structure according to claim 5 characterised in that a first (21; 51) and a second (22; 52) metal structure of which at least one has a surface coating or surface which can be chemically converted to an electrical insulating layer, are connected together in three-dimensionally positively locking relationship (24) by joint deformation, wherein the convertible surface is between the metal structures (21, 22; 51; 52), and that then the convertible surface or surface layer is converted into an electrically insulating ceramic layer (23; 53), in particular by oxidation, whereby an insulating layer (23; 53) which is pressed in virtually on all sides is produced between the three-dimensional positively locking connections (24).

9. A process according to claim 8 characterised in that two steel sheets (21; 22) as the first and second metal structures are laid one on the other, wherein at least one of the sheets has an inside surface which can be chemically converted into an insulating layer, in particular an aluminium-bearing coating, that the two steel sheets are firstly jointly corrugated in a first direction, that the corrugated sheets are then corrugated once again in a second direction approximately perpendicular to the first direction, with considerable deformation of the first corrugation, whereby regular three-dimensional positively locking connections are produced between the sheets, and that finally the convertible inside surface is converted into a ceramic insulating layer by a chemical treatment and/or a heat treatment.

10. Use of a support structure according to one of claims 1 to 5 for stabilising an electrically heatable catalytic converter (1, 2, 3, 4, 5, 6, 7, 8), wherein the support structure (41, 42; 51, 52; 61, 62; 71, 72) is arranged in the interior of or at the ends of the catalytic converter (1, 2, 3, 4, 5, 6, 7, 8), more specifically in such a way that the first (41; 51; 61; 71) and second (42; 52; 62; 72) metallic structures are respectively fixed to first and second components (3, 4, 8) which are electrically insulated from each other, and fix them relative to each other.

11. Use of a support structure according to claim 10 characterised in that the electrically heatable catalytic converter (1, 2, 3, 4, 5, 6, 7, 8) is an electrically conductive honeycomb body (1, 2) with electrical subdivision (5, 6, 7) into different partial regions, wherein for the purposes of electrical subdivision but at the same time for mutual fixing of the different partial regions, the support structure (41, 42; 61, 62) is arranged between same in the interior of the honeycomb body (1, 2), wherein the first metal structure (41, 61) of the support structure is metallically fixedly connected to one of the partial regions and the second metal structure (42; 62) is metallically fixedly connected to another of the partial regions, in particular by brazing and/or welding and/or sintering thereto.

12. Use of a support structure according to claim 10 characterised in that the electrically heatable catalytic converter (1, 2, 3, 4, 5, 6, 7, 8) is an electrically conductive honeycomb body (1, 2) with electrical subdivision (5, 6, 7) into different partial regions, wherein the support structure (71, 72) is arranged at the ends of the catalytic converter (1, 2, 3, 4, 5, 6, 7, 8) and supports different partial regions relative to each other by the first metal structure (71) of the support structure being metallically fixedly connected to one of the partial regions (8) and the second metal structure (72) being metallically fixedly connected to another partial region (3), in particular by brazing and/or welding and/or sintering thereto.

## Revendications

1. Structure de support électriquement isolante, pouvant être chargée mécaniquement dans toutes les directions et comportant une possibilité de liaison mécanique à des composants électriquement conducteurs, séparés électriquement les uns des autres, caractérisée en ce qu'on utilise comme matériau électriquement isolant un matériau céramique (13;15;23;33;53;73), qui est comprimé spatialement, c'est-à-dire presque de tous côtés, le matériau céramique (13;15;23;33;53;73) étant disposé entre une première structure métallique (11;21;31;41;51;61;71) et une seconde structure métallique (12;14;22;32;42;52;62;72) et que les deux structures sont formées de telle sorte qu'elles appliquent, presque de tous côtés, une pression au matériau céramique (13;15;23;33;53;73), sans se toucher réciproquement.

2. Structure de support selon la revendication 1, caractérisée en ce que la première structure métallique est un fil continu (11;41;61;71) ou une bande continue (31) et que la seconde structure métallique est constituée par des éléments partiels individuels (12;14;42;62), qui enserrent le fil (11;41;61;71) ou la bande (31), le matériau céramique (13;15;73) étant respectivement serré entre les deux structures métalliques.

3. Structure de support selon la revendication 2, caractérisée en ce que le matériau céramique est constitué par des billes céramiques individuelles (15) ou des petits tubes céramiques (13;73), qui entourent la première structure métallique (11;71) et sont enserrés par la seconde structure métallique (12;14;72).

4. Structure de support selon la revendication 1, caractérisée en ce que la première structure métallique (21;51) est reliée à la seconde structure métallique (22;52) selon une liaison par formes complémentaires, par une ou plusieurs parties renflées comportant au moins une zone d'étranglement (24), par exemple à la manière de boutons-poussoirs, un matériau céramique (23;53), notamment une mince couche d'oxyde métallique, étant présent entre les structures.

5. Structure de support selon l'une des revendications précédentes, caractérisée en ce que le matériau céramique (23;53) est fabriqué par oxydation ou traitement chimique de la surface ou d'un revêtement de surface d'au moins l'une des deux structures (21,22;51,52), de préférence une fois que la structure de support (21,22;51,52) a pris sa forme désirée.

6. Procédé pour fabriquer une structure de support selon la revendication 1, caractérisé en ce qu'un matériau céramique (13;15;33;53;73), de préférence sous forme de poudre, est pressé presque de tous côtés entre une première structure métallique (11;21;31;41;51;61;71) et une seconde structure métallique (12;14;32;42;52;62;72), les première et seconde structures métalliques étant formées de telle sorte que ces deux structures sont accessibles, au moins dans des zones partielles, pour la liaison métallique à d'autres structures (3;4).

7. Procédé selon la revendication 6, caractérisé en ce que la première structure métallique (11;41;61) est réalisée d'un seul tenant et que la seconde structure métallique (12;14;42;62) est fabriquée par subdivision d'une enveloppe métallique entourant la première structure métallique (11;41;61), en plusieurs sections individuelles (42;62).

8. Procédé pour fabriquer une structure de support selon la revendication 5, caractérisé en ce qu'une première structure métallique (21;51) et une seconde structure métallique (22;52), dont l'une au moins possède une surface formant revêtement de surface, pouvant être transformée chimiquement en une couche électriquement isolante, sont reliées entre elles selon une liaison tridimensionnelle par formes complémentaires (24), au moyen d'une déformation commune, la surface pouvant être transformée étant située entre les structures métalliques (21,24;51; 52), et que la surface ou la couche superficielle, pouvant être transformée, est ensuite transformée en une couche céramique électriquement isolante (23;53), notamment par oxydation, ce qui fait apparaître une couche isolante (23;53), serrée presque de tous côtés, entre les systèmes de liaison tridimensionnelle par formes complémentaires (24).

9. Procédé selon la revendication 8, caractérisé en ce qu'on superpose deux tôles en acier (21;22) en tant que première et seconde structures métalliques, au moins l'une des tôles possédant une surface intérieure pouvant être transformée chimiquement en une couche isolante, notamment un revêtement contenant de l'aluminium, qu'on donne conjointement une forme ondulée aux deux tôles d'acier et ce tout d'abord dans une première direction, qu'on donne ensuite aux tôles ondulées à nouveau une ondulation dans une seconde direction approximativement perpendiculaire à la première, moyennant une forte déformation de la première ondulation, ce qui fait apparaître des liaisons tridimensionnelles régulières par formes complémentaires entre les tôles, et qu'enfin on transforme la surface intérieure pouvant être transformée, en une couche isolante céramique au moyen d'un traitement chimique et/ou d'un traitement thermique.

10. Utilisation d'une structure de support selon l'une des revendications 1 à 5 pour stabiliser un convertisseur catalytique (1,2,3,4,5,6,7,8) pouvant être chauffé électriquement, la structure de support (41,42; 51,52; 61,62; 71,72) étant disposée à l'intérieur ou sur les faces frontales du convertisseur catalytique (1,2,3,4,5,6,7,8), et ce de telle sorte que la première structure métallique (41;51;61;71) et la seconde structure métallique (42;52;62; 72) sont fixées sur les premier et second composants (3,4,8) séparés électriquement l'un de l'autre et fixent ces derniers l'un par rapport à l'autre.

11. Utilisation d'une structure de support selon la revendication 10, caractérisée en ce que le convertisseur catalytique (1,2,3,4,5,6,7,8), pouvant être chauffé électriquement, est un corps en nid d'abeilles électriquement conducteur (1,2) présentant une subdivision électrique (5,6,7) en différentes zones partielles, la structure de support (41,42;61,62) étant disposée de manière à réaliser la subdivision électrique, mais simultanément pour réaliser la fixation réciproque des différentes zones partielles, entre ces dernières à l'intérieur du corps en nid d'abeilles (1,2), la première structure métallique (41;61) et la seconde structure métallique (42;62) de la structure de support étant reliées selon une liaison rigide métallique, notamment par brasage dur et/ou soudage et/ou fixation par frittage, respectivement à une des zones partielles et à une autre des zones partielles.

12. Utilisation d'une structure de support selon la revendication 10, caractérisé en ce que le convertisseur catalytique (1,2,3,4,5,6,7,8) pouvant être chauffé électriquement est un corps en nid d'abeilles électriquement conducteur (1,2) présentant une subdivision électrique (5,6,7) dans différentes zones partielles, la structure de support (71,72) étant disposée sur les faces frontales du convertisseur catalytique (1,2,3,4,5,6,7,8) et supportant réciproquement différentes zones partielles les unes par rapport aux autres par le fait que la première structure métallique (71) et la seconde structure métallique (72) de la structure de support sont reliées selon une liaison métallique rigide, notamment par un brasage dur et/ou soudage et/ou fixation par fittage, respectivement à l'une des zones partielles (8) et à une autre zone partielle (3).
